# EUROPÄISCHE PATENTANMELDUNG

(11) **EP 0 645 652 A1**
(43) Veröffentlichungstag der Anmeldung: **29.03.1995**
(21) Anmeldenummer: 94114146.7
(22) Anmeldetag: 08.09.1994
(51) Int. Cl.: G02B 6/28

(54) **Anordnung zur Verzögerung eines optischen Signals**

(30) Priorität: 27.09.1993 DE 4332841
(71) Anmelder: SIEMENS AKTIENGESELLSCHAFT, D-80333 München (DE)
(72) Erfinder: Osborne, Robert,Dr., D-81371 München (DE)

(57) **Zusammenfassung**

Bei einer Verzögerungseinrichtung zur Verzögerung eines optischen Signals ist der Signalweg mit einer Wellenlängen-Umsetzeinrichtung und einer wellenlängenselektiven Verzögerungsleitung gebildet. Die Wellenlänge des von der Wellenlängen-Umsetzeinrichtung abgegebenen optischen Signals ist veränderbar. Die Verzögerungsdauer des optischen Signals erfolgt in Stufen in Abhängigkeit der jeweiligen Wellenlänge. Eine erste Verwendung betrifft eine Anordnung zur Änderung der Reihenfolge von seriell übertragenen Datenblöcken, wobei die Anordnung als Zeitstufe für eine Vermittlungseinrichtung wirkt. Eine zweite Verwendung betrifft die Synchronisation einer Mehrzahl von optischen Signalen an den Eingängen einer Vermittlungseinrichtung.

## Beschreibung

Bei der Übertragung von optischen Signalen ist vielfach eine Verzögerung erforderlich, sei es um eine Mehrzahl von optischen Signalen untereinander zu synchronisieren oder den Zugangskonflikt von auf verschiedenen Wellenleitern geführten Datenblöcken auf nur einen Wellenleiter aufzulösen. Zunehmende Bedeutung kommt den optischen Verzögerungseinrichtungen im Rahmen der optischen Signalverarbeitung (Optical Computing) zu, wo sie zur Zwischenspeicherung der optischen Signale eingesetzt werden.

Die Erfindung betrifft eine Anordnung zur Verzögerung eines in einem Wellenleiter geführten optischen Signals in vorgegebenen Stufen, bei der
- eine Wellenlängen-Umsetzeinrichtung (WU) und eine Verzögerungseinrichtung (WSVL) den Signalweg für das optische Signal bilden,
- die mit einer Verzögerungsleitung gebildete Wellenlängen-Umsetzeinrichtung bezüglich der Wellenlänge des von ihr abgegebenen optischen Signals einstellbar ist,
- die Verzögerungseinrichtung das optische Signal um eine der Wellenlänge entsprechende Verzögerungsstufe verzögert,

Aus Photonik Switching II, Proceedings of the International Topical Meeting, Kobe, Japan, April 12-14, 1990, Springer Verlag, Seiten 296 bis 299,"Photonic ATM Switching Network" von S. Kuroyanagi, T. Shimoe und K. Murakami ist eine mit Optical Buffer Memory bezeichnete Anordnung bekannt, bei der ein optisches Signal mit Hilfe eines Wellenlängen-Umsetzungs-Lasers in ein optisches Signal mit einer jeweils erforderlichen Wellenlänge umgesetzt wird. Dieses optische Signal wird über eine passive optische Verteileinrichtung (Splitter) einer Mehrzahl von Filtern mit untereinander unterschiedlichen, festgelegten Wellenlängen-Durchlaßbereichen zugeführt. Eine Verzögerungskette ist mit einer der Mehrzahl von Filtern gleichenden Anzahl von Kettengliedern gebildet. Die Kettenglieder sind jeweils wiederum mit einer Verzögerungsleitung und einer Einkoppeleinrichtung gebildet. Die Filter sind ausgangsseitig jeweils mit einer Einkoppeleinrichtung verbunden. Das optische Signal durchläuft nach Maßgabe der jeweiligen Wellenlänge eine jeweilige Anzahl von Kettengliedern. Über die Wellenlänge des optischen Signals sind also verschiedene Stufen von Verzögerungsdauern wählbar. Bei dieser Anordnung macht sich ein prinzipbedingter hoher Intensitätsverlust nachteilig bemerkbar, der zum einen durch die Aufteilung des optischen Signals in dem Splitter und zum anderen durch von den Einkoppelvorrichtungen verursachte Einfügeverluste bedingt ist. Darüber hinaus muß das optische Signal für längere Verzögerungsdauern eine zunehmende Anzahl von Übergangsstellen durchlaufen, wodurch das von der Anordnung abgegebene optische Signal für unterschiedliche Verzögerungsdauern einen unerwünscht großen Bereich von Intensitäten aufweist.

Der Anmeldung liegt das Problem zugrunde, eine Anordnung anzugeben, die die Nachteile des Standes der Technik überwindet.

Das Problem wird dadurch gelöst, daß die Verzögerungsleitung mit den Verzögerungsstufen entsprechend beabstandeten Reflexionsschichten versehen ist.

Die Anordnung gemäß dem Anordnungsgegenstand weist gegenüber dem angegebenen Stand der Technik neben einem verringerten Aufwand für den Aufbau den Vorteil einer durch die Reduzierung der Anzahl der Übergangsstellen verringerten Signalabschwächung auf, wobei gleichzeitig der Unterschied der Abschwächung zwischen einem gering verzögerten optischen Signal und einem stark verzögerten optischen Signal verringert ist.

In weiterer Ausgestaltung gleicht der kleinste Verzögerungsunterschied der anmeldungsgemäßen Anordnung der Übertragungsdauer eines Datenblocks. Diese Anordnung kann zur Änderung der Reihenfolge von in einem optischen Signal seriell übertragenen Datenblöcken eingesetzt werden. Diese Maßnahme bringt die Verwendbarkeit der anmeldungsgemäßen Anordnung als Zeitstufe in einer Datenblöcke vermittelnden Vermittlungseinrichtung mit sich.

In einer anderen Ausgestaltung gleicht der kleinste Verzögerungsunterschied der anmeldungsgemäßen Anordnung einem Bruchteil der Übertragungsdauer eines Datenblocks. Diese Maßnahme bringt eine Synchronisierbarkeit von in dem optischen Signal übertragenen Datenblöcken mit auf anderen Wellenleitern übertragenen Datenblöcken oder mit einem Taktsignal mit sich.

Die Erfindung wird nun als Ausführungsbeispiel in zum Verständnis erforderlichem Umfang anhand von Figuren näher beschrieben.

Dabei zeigen:
- Fig. 1: eine Anordnung zur Änderung der Reihenfolge von in einem optischen Signal seriell übertragenen Datenblöcken.
- Fig. 2: einen möglichen zeitlichen Ablauf bei der Änderung der Reihenfolge von Datenblöcken in Fig. 1.
- Fig. 3: an den Eingängen einer Vermittlungseinrichtung angeordnete Verzögerungseinrichtungen.

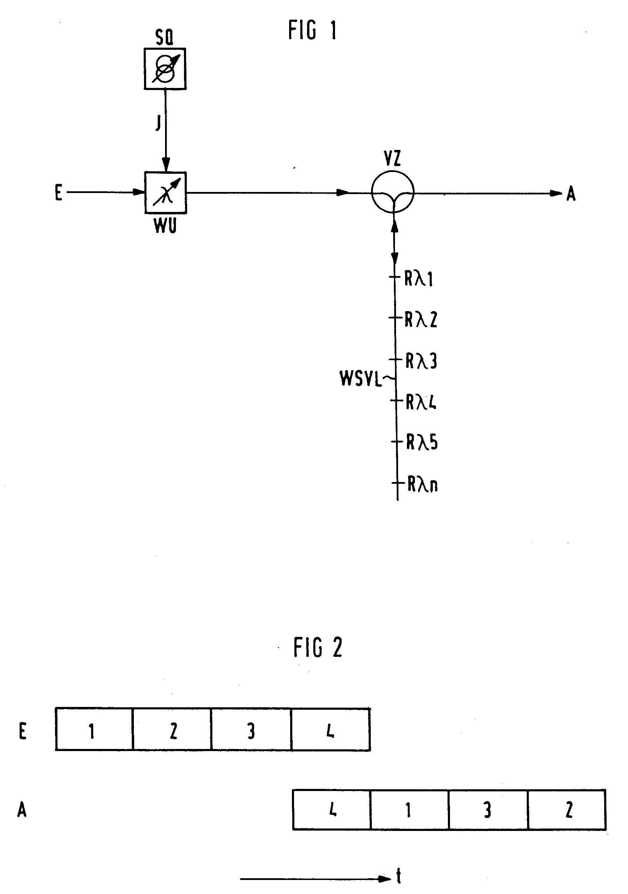

In Fig. 1 wird einer Wellenlängen-Umsetzeinrichtung WU eingangsseitig auf einem mit E bezeichneten Wellenleiter ein optisches Signal zugeführt. Das optische Signal möge im Zuge eines asynchronen Übertragungsverfahrens seriell übertragene Nachrichtenzellen führen. Das asynchrone Übertragungsverfahren kann beispielsweise durch den an sich bekannten asynchronen Transfermode (ATM) gegeben sein. Die Wellenlängen-Umsetzeinrichtung kann beispielsweise durch eine aus Electronics Letters, Vol. 23, pp. 1088-1089, 1987, "Tunable Optical Conversion Using a Multi Electrode Distributed Feedback Laser Diode with a Saturable Absorber" oder aus Proceedings Fourth Photonic Switching Topical Meeting, Salt Lake City, March 1991, Paper WA2, bekannte, stromgesteuerte DFB (Distributed Feed-Back) Laserdiode gegeben sein. Diese Laserdioden vermögen - unter der Voraussetzung eines eingangsseitig zugeführten optischen Signals mit einer vorgegebenen Mindestintensität - in Abhängigkeit von der von einer steuerbaren Stromquelle SQ zugeführten Stärke des steuernden Stromes I am Ausgang ein optisches Signal mit einer aus einer Mehrzahl von möglichen Wellenlängen abzugeben. Das von der Wellenlängen-Umsetzeinrichtung abgegebene optische Signal wird über einen herkömmlichen Verzweiger WZ einer wellenlängenselektiven Verzögerungsleitung WSVL zugeführt. Diese Verzögerungsleitung kann beispielsweise durch eine aus Electronics Letters, 7th Jan. 1993, Vol. 29, No. 1, pp. 28,29, "High Reflectivity and Narrow Bandwidth Fibre Gratings Written by a Single Excimer Pulse" oder aus Electronics Letters, 18th March 1993, Volume 29, No. 6, pp. 566..568 "Production of In-Fibre Gratings Using a Diffractive Optical Element" bekannte Verzögerungsleitung gegeben sein. In die Verzögerungsleitung sind an den mit Rλ₁ bis Rλₙ bezeichneten Stellen wellenlängenselektive Reflektionsschichten mit jeweils unterschiedlicher charakteristischer Wellenlänge eingebracht. Die wellenlängenselektiven Reflektionsschichten vermögen jeweils ein optisches Signal mit einer ihnen zugeordneten Wellenlänge zu reflektieren.

Bei einer ersten Ausführungsform des Anmeldungsgegenstandes gleicht der Laufzeitunterschied zweier benachbarter Reflektionsschichten dem zeitlichen Abstand des Auftretens zweier aufeinanderfolgender Nachrichtenzellen bzw. der gesamten Übertragungsdauer einer Nachrichtenzelle. Die an den einzelen wellenlängenselektiven Reflektionsschichten reflektierten optischen Signale werden über den Verzweiger einem mit A bezeichneten Wellenleiter zugeführt. Die von diesem Wellenleiter geführten optischen Signale können einer nicht näher dargestellten Umsetzeinrichtung zugeführt sein, die die optischen Signale mit unterschiedlichen Wellenlängen in ein optisches Signal mit einer einzigen Wellenlänge umsetzt. Diese Umsetzeinrichtung kann beispielsweise durch einen aus Optics and Photonics News, Dec. 1992, S. 31 "Optical Wavelength Shifter for Wavelength-Division Multiplexed Networks" bekannten optischen Inverter gegeben sein. Die insoweit beschriebene Anordnung kann zur Änderung der Reihenfolge seriell übertragener Datenblöcke fester Länge verwendet werden. Die Datenblöcke fester Länge mögen durch gemäß dem ATM-Übertragungsverfahren übertragene Nachrichtenzellen gegeben sein.

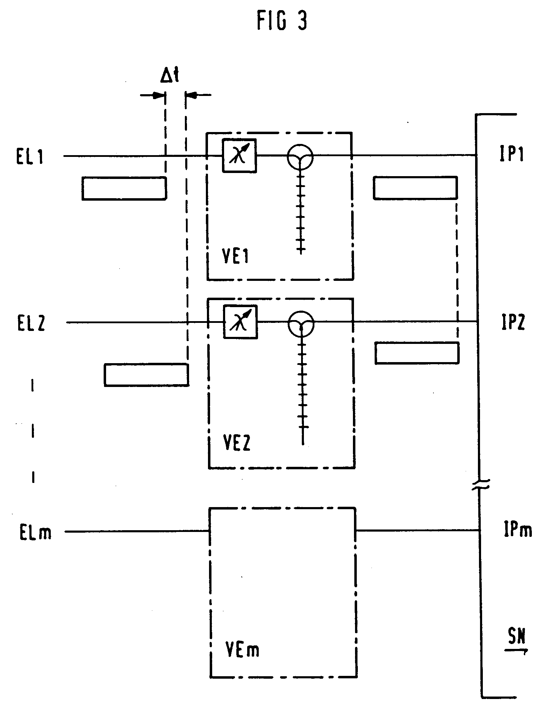

In Fig. 2 möge ein Beispiel betrachtet werden, bei dem, wie in Zeile E dargestellt, Nachrichtenzellen in einer ihren Bezeichnungen 1..4 entsprechenden Reihenfolge auf dem Wellenleiter E herangeführt werden und, wie in Zeile A dargestellt, in der Reihenfolge 4,1,3,2 auf den Wellenleiter A weitergeleitet werden sollen. Für die Nachrichtenzelle 4 ist keine Verzögerung erforderlich. Über eine nicht näher dargestellte Steuereinrichtung wird die Stromquelle derart eingestellt, daß sie an die Wellenlängen-Umsetzeinrichtung einen solchen Strom abgibt, bei dem die Nachrichtenzelle 4 als optisches Signal mit der Wellenlänge λ₁ weitergeleitet wird. Das optische Signal mit der Wellenlänge λ₁ wird an der Reflektionsschicht Rλ₁ reflektiert und erfährt somit eine kürzestmögliche Verzögerung. Die Nachrichtenzelle 1 muß um 4 Übertragungsdauern einer Nachrichtenzelle verzögert werden und wird deshalb mit einer Wellenlänge λ₄ weitergeleitet, die in der Reflektionsschicht Rλ₄ reflektiert wird. Die Nachrichtenzelle 2 muß um 5 Übertragungsdauern verzögert werden und wird deshalb mit einer Wellenlänge λ₅ weitergeleitet, die in der Reflektionsschicht Rλ₅ reflektiert wird. Die Nachrichtenzelle 3 muß um 3 Übertragungsdauern verzögert werden und wird deshalb mit einer Wellenlänge λ₃ weitergeleitet, die in der Reflektionsschicht Rλ₃ reflektiert wird. Bei dieser Vorgehensweise werden die Nachrichtenzellen, wie in Zeile A dargestellt, auf dem in Fig. 1 mit A bezeichneten Wellenleiter in der gewünschten Reihenfolge abgegeben. Aus vermittlungstechnischer Sicht hat die Anordnung nach Fig. 1 für die seriell ankommenden Nachrichtenzellen die Funktion einer Zeitstufe.

Bei einer zweiten Ausführungsform des Anmeldungsgegenstandes wird die in Fig. 1 beschriebene Verzögerungseinrichtung jeweils an den Eingängen IP1..IPm (für Input-Port) einer in Fig. 3 angedeuteten Vermittlungseinrichtung verwendet. In Vermittlungseinrichtungen werden die an den Eingängen ankommenden Nachrichtenzellen üblicherweise nach Maßgabe eines Taktsignals synchron zueinander durchgeschaltet. Die Eingänge sind im allgemeinen mit Verbindungen aus verschiedenen Richtungen verbunden. Die verschiedenen Verbindungen haben im allgemeinen wiederum unterschiedliche Längen und damit unterschiedliche Laufzeiten, so daß die Nachrichtenzellen an den Eingängen einer Vermittlungseinrichtung untereinander einen zeitlichen Versatz Δₜ aufweisen. Zur synchronen Durchschaltung der an den Eingängen anliegenden Nachrichtenzellen ist eine Synchronisation der übrigen Nachrichtenzellen mit der jeweils die längste Verzögerung aufweisenden Nachrichtenzelle erforderlich. Bei der Verzögerungseinrichtung in Fig. 3 gleicht der Unterschied bezüglich der Verzögerungsdauer zweier benachbarter Reflektionsschichten einem rationalen Bruchteil der Übertragungsdauer einer Nachrichtenzelle. Dieser Verzögerungsunterschied kann beispielsweise der Übertragungsdauer eines Bytes gleichen.

Bei der in Fig.3 dargestellten Anordnung werden auf durch Wellenleiter gegebenen Eingangsleitungen EL1..ELm optische Signale herangeführt, wobei die in dem optischen Signal übertragenen Nachrichtenzellen bei der Ankunft in der Vermittlungseinrichtung aus den oben erwähnten Gründen im allgemeinen untereinander einen zeitlichen Versatz aufweisen. Eine nicht näher dargestellte Steuerungseinrichtung ermittelt die die längste zeitliche Verzögerung aufweisende Nachrichtenzelle und veranlaßt die zugehörige Verzögerungseinrichtung VE1..VEm eine möglichst kurze Verzögerungsdauer einzunehmen. Ausgehend von dieser möglichst kurzen Verzögerungsdauer ermittelt die Steuereinrichtung für ein synchrones Auftreten der Nachrichtenzellen an den Eingängen IP1..IPm die jeweils erforderliche Verzögerungsdauer und bewirkt eine entsprechende Einstellung der betreffenden Verzögerungseinrichtungen.

## Patentansprüche

1. Anordnung zur Verzögerung eines in einem Wellenleiter geführten optischen Signals in vorgegebenen Stufen, bei der
- eine Wellenlängen-Umsetzeinrichtung (WU) und eine Verzögerungseinrichtung (WSVL) den Signalweg für das optische Signal bilden,
- die Wellenlängen-Umsetzeinrichtung bezüglich der Wellenlänge des von ihr abgegebenen optischen Signals einstellbar ist,
- die mit einer Verzögerungsleitung gebildete Verzögerungseinrichtung das optische Signal um eine der Wellenlänge entsprechende Verzögerungsstufe verzögert,
**dadurch gekennzeichnet,** daß die Verzögerungsleitung mit den Verzögerungsstufen entsprechend beabstandeten Reflexionsschichten versehen ist.

2. Anordnung nach Anspruch 1,
**dadurch gekennzeichnet,** daß die Wellenllängen-Umsetzeinrichtung nach Maßgabe eines ihr zugeführten Stromes steuerbar ist.

3. Anordnung nach Anspruch 1,
**dadurch gekennzeichnet,** daß die Wellenlängen-Umsetzeinrichtung durch eine zwei optische Eingänge aufweisende Einrichtung gegeben ist, die ein an ihrem einen Eingang zugeführtes, bezüglich der Wellenlänge veränderliches Photosignal nach Maßgabe des an ihrem anderen Eingang zugeführten optischen Signals moduliert.

4. Anordnung nach Anspruch 1 bis 3,
**dadurch gekennzeichnet,** daß das optische Signal im Zuge eines asynchronen Übertragungsverfahrens übertragene Nachrichtenzellen mit fester Übertragungsdauer führt.

5. Anordnung nach Anspruch 4,
**dadurch gekennzeichnet,** daß der Unterschied bezüglich der Verzögerung zweier benachbarter Verzögerungsstufen der Übertragungsdauer einer Nachrichtenzelle gleicht.

6. Anordnung nach Anspruch 4,
**dadurch gekennzeichnet,** daß der Unterschied bezüglich der Verzögerung zweier benachbarter Verzögerungsstufen einem Bruchteil der Übertragungsdauer einer Nachrichtenzelle gleicht.

7. Verwendung einer Verzögerungsanordnung nach Anspruch 5 zur Änderung der Reihenfolge von in dem optischen Signal seriell übertragenen Nachrichtenzellen.

8. Verwendung einer Verzögerungsanordnung nach Anspruch 6 zur Synchronisierung des optischen Signals mit einem Taktsignal.

9. Verwendung einer Verzögerungsanordnung nach Anspruch 6 zur Erzeugung eines vorgegebenen zeitlichen Versatzes zwischen zwei auf unterschiedlichen Wellenleitern geführten Nachrichtenzellen.
